# EUROPEAN PATENT SPECIFICATION

(11) **EP 1 682 031 B1**
(45) Date of publication and mention of the grant of the patent: **20.08.2008**
(21) Application number: 04796604.9
(22) Date of filing: 28.10.2004
(51) Int. Cl.: A61C 17/20

(54) **ULTRASONIC INSERT WITH SOFT GRIP AND METHOD**
ULTRASCHALLEINSATZ MIT WEICHEM GRIFF UND VERFAHREN
INSERT ULTRASONIQUE A MANCHE SOUPLE ET PROCEDE CORRESPONDANT

(30) Priority: 31.10.2003 US 698112
(43) Date of publication of application: 26.07.2006
(73) Proprietor: DENTSPLY INTERNATIONAL, INC., York, PA 17405-0872 (US)
(72) Inventor: POLLOCK, David, P., York, PA 17404 (US); WERNER, Peter, H., Columbia, PA 17512 (US); PETERSON, Kenneth, S., Lancaster, PA 17603 (US)
(74) Representative: Hartz, Nikolai
(86) International application number: PCT/US2004/035756
(87) International publication number: WO 2005/044136

(56) References cited:
- WO-A-03/011163
- US-A- 5 915 965
- US-B1- 6 386 866
- US-E- R E30 536

## Description

The invention provides an ultrasonic dental scaler insert having a soft grip, and a method of making it. A grip for an ultrasonic scaler according to the preamble of claims 1 and 8 is known from WO 03/011163.

### Brief Description of the Drawings

FIGURE 1 is a perspective view of an ultrasonic dental insert having a soft grip member in accordance with the invention in a handpiece with a cable.

FIGURE 2 is a cross-sectional side view of the ultrasonic dental insert in a handpiece of FIGURE 1, but without the cable.

FIGURE 3 is a perspective view of the ultrasonic dental insert having a soft grip member of FIGURE 1.

FIGURE 4 is a cross-sectional bottom view of an ultrasonic dental insert having a soft grip member of FIGURE 3.

FIGURE 5 is a perspective view of a soft grip member in accordance with the invention.

FIGURE 6 is a cross-sectional side view of the soft grip member of FIGURE 5.

FIGURE 7 is a perspective side view of half of a nozzle having grip layer.

FIGURE 8 is a perspective side view of half of the nozzle having grip layer of FIGURE 7, and positioned adjacent to an ultrasonic dental insert.

FIGURE 9 is a perspective side view of a nozzle having grip layer affixed to an ultrasonic dental insert in accordance with the invention.

### Detailed Description of the Invention

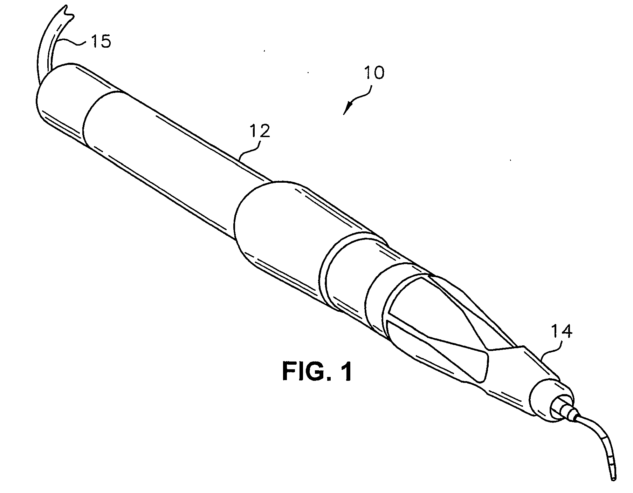

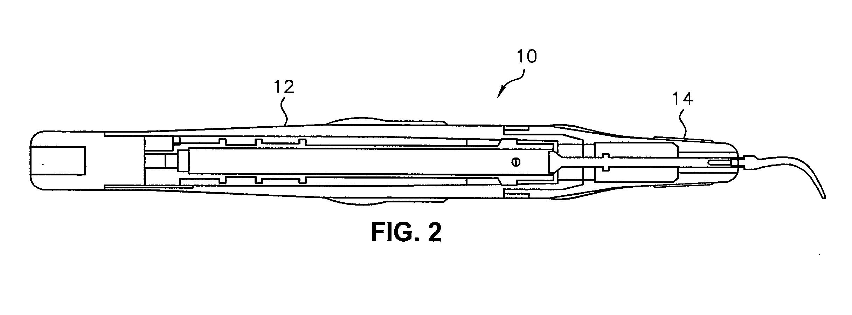

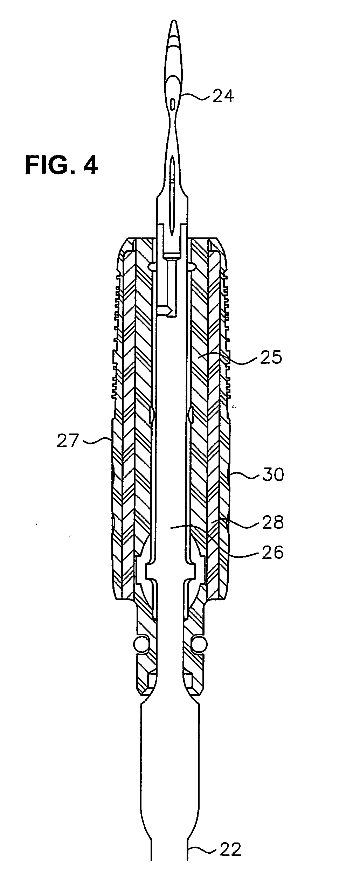

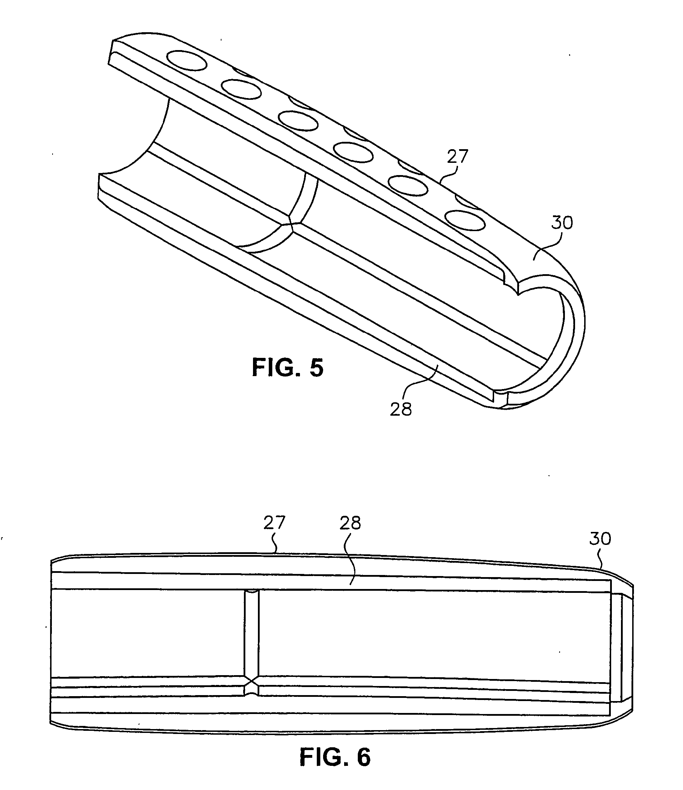

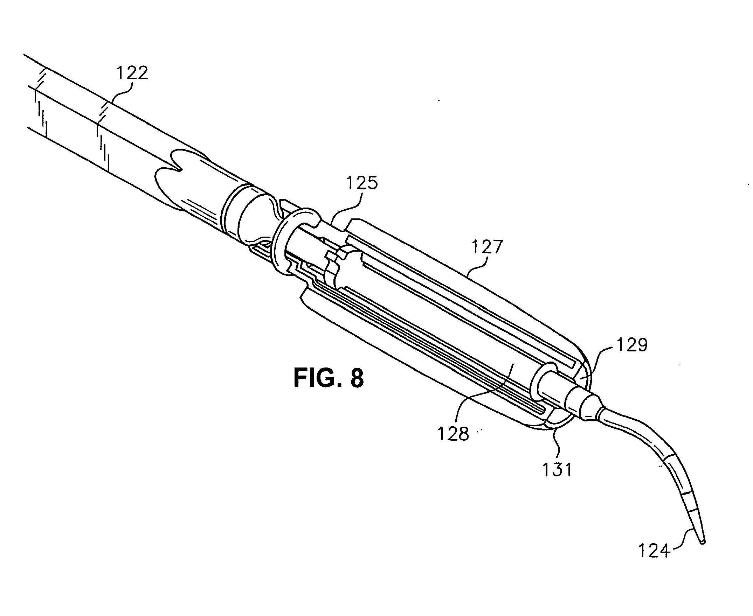

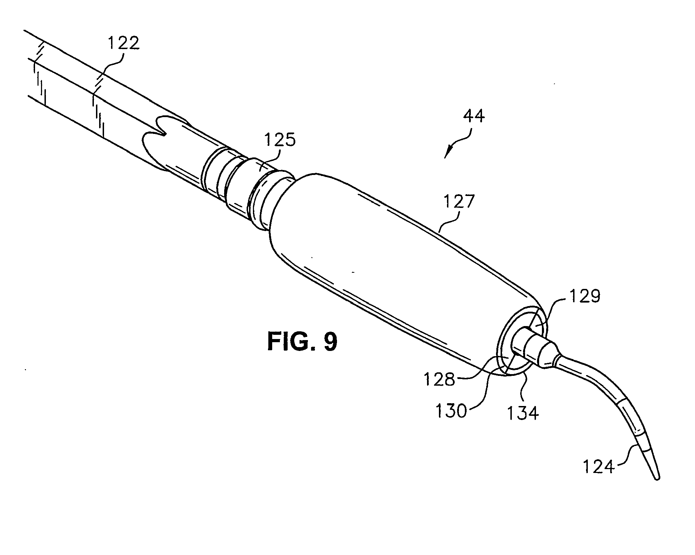

The invention is now described with reference to FIGURES 1 through 9. With more particular reference to FIGURES 1 and 2 it is seen that handpiece 10 comprises an elongated housing 12 which is adapted to receive insert 14 into one end. Cable 15 is attached at the opposite end of elongated housing 12. Cable 15 encloses hoses for delivering air, powder, and/or water to the handpiece 10. Cable 15 also encloses electrical wires connected to coils in elongated housing 12.

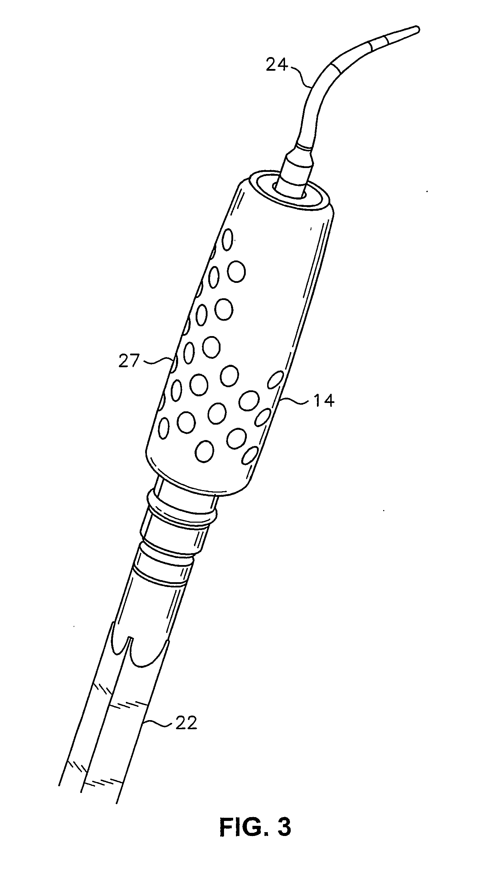

With more particular reference to FIGURES 3 through 6 it is seen that insert 14 has magnetostrictive stack 22 and tip 24 connected to opposite ends of connector 26. Connector 26 supports nozzle 25. Insert 14 has soft grip member 27 having a rigid polymeric inner wall 28 and elastomeric outer wall 30. Soft grip member 27 is press fit onto nozzle 25 of connector 26. Exemplary, rigid polymeric material for use in accordance with the invention include Nylon 6; Nylon 6,6; polypropylene and liquid crystal polymer.

The elastomeric material of outer wall 30 provides a soft, non-slip grip surface for the user to hold onto insert 14. Elastomeric material, of outer wall 30 functions as a vibration absorber (or vibration insulator) to reduce the amount of vibration transferred to hand of the user holding insert 14. Nozzle 25 is preferably made of rigid polymeric material. Magnetostrictive stack 22, tip 24 and connector 26 are preferably made of metal.

Preferably, elastomeric outer wall 30 is molded onto rigid polymeric inner wall 28. Elastomeric material may be applied to rigid inner wall 28, for example, by injection molding of fluid, which forms elastomeric material. Preferably, as the elastomeric material solidifies to form the elastomeric material of outer wall 30, a bond forms between the elastomeric material and the rigid material of inner wall 28. Preferably this bond retains its strength in a sterilizing environment. A sterilizing environment may, for example, be heated to 135°C for 14 minutes at 220 kPa pressure. Preferably, all of the materials used are autoclavable.

Alternatively, outer wall 30 and inner wall 28 are separately molded. Then outer wall 30 and inner wall 28 are adhered together by applying an adhesive layer between them.

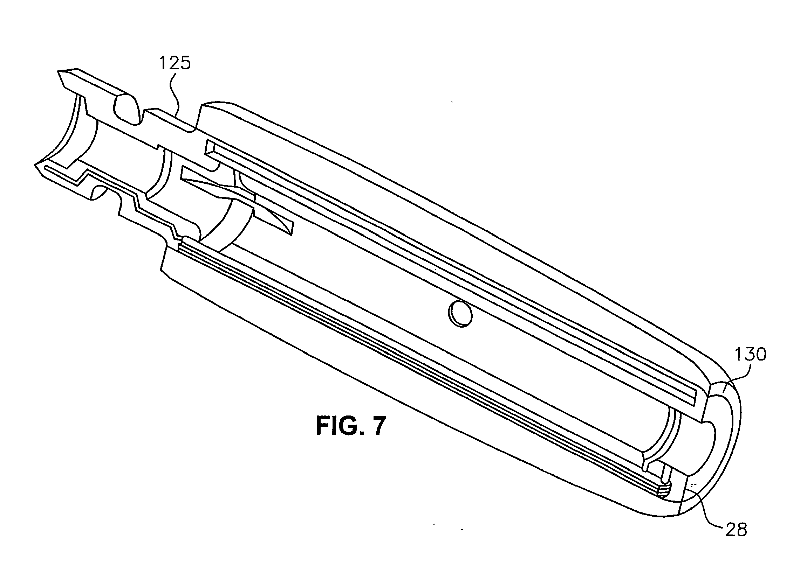

With more particular reference to FIGURES 7 through 9 it is seen that insert 114 has magnetostrictive stack 122 and tip 124 connected to opposite ends of connector 126. Connector 126 supports nozzle 125. Insert 114 has soft grip member 127 having a rigid polymeric half nozzle walls 128 and 129 and elastomeric outer walls 130 and 131. Two halves of nozzle 125 are positioned to circumscribe connector 126. Then the two halves of nozzle 125 are adhered together.

Preferably elastomeric outer wall 130 is molded onto rigid polymeric half nozzle wall 128, for example by injection molding. Similarly, elastomeric outer wall 131 may be molded onto rigid polymeric half nozzle wall 129, for example by injection molding. Thus, elastomeric outer wall 130 may be molded onto rigid polymeric material of half nozzle wall 128 by injection molding of a fluid which forms the elastomeric material. Similarly, elastomeric outer wall 131 may be molded onto rigid polymeric material of half nozzle wall 129 by injection molding of a fluid which forms the elastomeric material. Preferably as the fluid forms the elastomeric material of outer wall 130 it forms a bond to the rigid polymeric material of half nozzle wall 128. Similarly, as the fluid forms the elastomeric material of outer wall 131 it forms a bond to the rigid polymeric material of half nozzle wall 129.

Alternatively, elastomeric outer wall 130 and half nozzle wall 128 may be adhered together by applying adhesive between them. Similarly, elastomeric outer wall 131 and half nozzle wall 129 may be adhered together by applying adhesive between them. Preferably, these bonds effectively retain their strength in a sterilizing environment. The elastomeric material of outer walls 130 and 131 provides a soft, non-slip grip surface for the user to hold insert 114. Also, elastomeric material of outer walls 130 and 131 functions as a vibration insulator for the user holding insert 114.

Nozzle 125 is preferably made by adhering half nozzle wall 128 to half nozzle wall 129. The adjacent sides of elastomeric material of outer walls 130 and 131 are preferably adhered together. Magnetostrictive stack 122, tip 124 and connector 126 are preferably made of metal. In use the insert 114 with nozzle 125 and elastomeric outer wall 130, is inserted into an elongated housing, such as elongated housing 12 to form a dental handpiece for ultrasonic cleaning of teeth.

Thus, in accordance with the invention is provided a method of making an ultrasonic dental scaler insert having a soft grip. This ultrasonic dental scaler insert is made by providing a soft grip member having an elastomeric wall affixed to a rigid wall, and connecting the soft grip member to an ultrasonic dental scaler insert to form an ultrasonic dental scaler insert having a soft grip. The ultrasonic dental scaler insert has a tip, a connector, and a magnetostrictive member. The connector has a first connector end connected to the tip, and a second connector end, connected to the magnetostrictive member. In one embodiment of the invention the rigid wall is generally cylindrical, and the soft grip is snap-fit onto the connector. In another embodiment of the invention the nozzle is formed by the rigid wall.

While present embodiments of the invention and methods of practicing the same have been illustrated and described, it will be recognized by those skilled in the art that this invention may be otherwise variously embodied and practiced within the scope of the following claims.

## Claims

1. A method of making an ultrasonic dental scaler insert (14) having a soft grip, comprising the following sequence of steps:
(i) providing
- a soft grip (27, 127) and
- an ultrasonic dental scaler insert (14, 114),
said ultrasonic dental scaler insert (14, 114) having
- a tip (24, 124),
- a connector (26, 126), and
- a magnetostrictive member,
said connector (26, 126) having a first connector end and a second connector end, said first connector end being connected to said tip (24, 124), said second connector end being connected to said magnetostrictive member (22),
**characterized in that**
said soft grip (27, 127) having
- a rigid polymeric inner wall (28, 128, 129) bonded to
- an elastomeric outer wall (30, 130, 131), and **in that** the method further comprises
(ii) affixing said soft grip to said ultrasonic dental scaler insert (14, 114), to form an ultrasonic dental scaler insert (14, 114) having a soft grip.

2. The method of claim 1 wherein said rigid polymeric inner wall (28, 128, 129) is generally cylindrical, and said soft grip is snap-fit onto said connector (26, 126).

3. The method of claim 1 wherein said rigid polymeric inner wall (28, 128, 129) comprises a first rigid polymeric side and a second rigid polymeric side, said elastomeric outer wall (30, 130, 131) comprises a first elastomeric side and a second elastomeric side, said first elastomeric side is affixed to said first rigid polymeric side, said second elastomeric side is affixed to said second rigid polymeric side, and said rigid polymeric inner wall (28, 128, 129) is formed by affixing said first rigid polymeric side to said second rigid polymeric side.

4. The method of claim 1 wherein said soft grip member (27, 127) is generally cylindrical.

5. The method of claim 1 wherein said rigid polymeric inner wall (28, 128, 129) is generally cylindrical and said elastomeric outer wall (30, 130, 131) is generally cylindrical.

6. The method of claim 1 wherein said soft grip member (27, 127) is generally cylindrical and is snap-fit onto said ultrasonic dental scaler insert (14, 114).

7. The method of claim 1 wherein said rigid polymeric inner wall (28, 128, 129) forms a nozzle (25) for said ultrasonic dental scaler insert (14, 114).

8. An insert (14, 114) for use in a dental handpiece (10) having a housing (12) having a longitudinal bore, comprising:
a tip (24, 124),
a magnetostrictive member,
a connecting member,
a nozzle (25), and
a grip,
said tip (24, 124) being connected to a first end of said connecting member,
said magnetostrictive member being connected to a second end of said connecting member,
said nozzle (25) being supported by said connecting member,
said grip being supported by said nozzle (25),
**characterized in that**
said grip comprising rigid polymeric material inner wall (28, 128, 129) bonded to an elastomeric polymeric material outer wall (30, 130, 131).

9. A method of making an ultrasonic dental scaler insert (14, 114) having a soft grip according to claim 1, comprising:
providing an ultrasonic dental scaler insert (14, 114) having a nozzle (25) and a magnetostrictive member,
providing a soft grip having a rigid polymeric channel supporting an elastomeric outer layer,
positioning said soft grip member (27, 127) over said nozzle (25) to form an ultrasonic dental scaler insert (14, 114) having a soft grip.

10. The method of claim 9 wherein said rigid polymeric channel is generally cylindrical and said elastomeric layer is generally cylindrical.

11. The method of claim 9 wherein said soft grip is generally cylindrical and is snap-fit onto said ultrasonic dental scaler insert (14, 114).

12. A method of making an ultrasonic dental scaler insert (14, 114) according to claim 1, comprising the following sequence of steps:
(a) providing an ultrasonic dental scaler insert (14, 114), and a first soft grip half-section member and a second soft grip half-section member, said first soft grip half-section member having a first rigid polymeric inner wall (28, 128, 129) and a first elastomeric outer wall (30, 130, 131), and said second soft grip half-section member having a second rigid polymeric inner wall (28, 128, 129) and a second elastomeric outer wall (30, 130, 131),
said ultrasonic dental scaler insert (14, 114) having a tip (24, 124), a connector (26, 126), and a magnetostrictive member, said connector (26, 126) having an elongated body, a first connector end and a second connector end, said first connector end being connected to said tip (24, 124), said second connector end being connected to said magnetostrictive member, and
(b) affixing said first soft grip half-section member to said second soft grip half-section member to form a soft grip, whereby said first rigid polymeric inner wall and said second rigid polymeric inner wall circumscribe said elongated body to form an ultrasonic dental scaler insert (14, 114) having a soft grip:

13. A method of making an ultrasonic dental scaler insert (14, 114) having a soft grip according to claim 1, comprising the following sequence of steps:
providing a soft grip member (27, 127) having an elastomeric outer wall (30, 130, 131) affixed to a rigid polymeric inner wall (28, 128, 129), and connecting said soft grip member (27, 127) to an ultrasonic dental scaler insert (14, 114) to form an ultrasonic dental scaler insert (14, 114) having a soft grip.

14. The method of claim 9 wherein said ultrasonic dental scaler insert (14, 114) has a tip (24, 124), a connector (26, 126), and a magnetostrictive member, said connector (26, 126) having a first connector end connected to said tip (24, 124), and a second connector end, connected to said magnetostrictive member.

15. The method of claim 10 wherein said rigid wall is generally cylindrical, and said soft grip is snap-fit onto said connector (26, 126).

16. The method of claim 10 wherein said ultrasonic dental scaler insert (14, 114) further comprises a nozzle (25) and said nozzle (25) comprises said rigid wall.

## Patentansprüche

1. Verfahren zur Herstellung eines Ultraschall-Zahnschabereinsatzes (14), der einen weichen Griff aufweist, das die folgende Stufenreihenfolge aufweist:
(i) Bereitstellen von
- einem weichen Griff (27, 127) und
- einem Ultraschall-Zahnschabereinsatz (14, 114), wobei der Ultraschall-Zahnschabereinsatz (14, 114) aufweist
- eine Spitze (24, 124),
- ein Verbindungsstück (26, 126) und
- ein Magnetostriktionselement,
das Verbindungsstück (26, 126) ein erstes Verbindungsstückende und ein zweites Verbindungsstückende aufweist, das erste Verbindungsstückende mit der Spitze (24, 124) verbunden ist, das zweite Verbindungsstückende mit dem Magnetostriktionselement (22) verbunden ist,
**dadurch gekennzeichnet, dass**
der weiche Griff (27, 127) aufweist
- eine steife polymere Innenwand (28, 128, 129), die an
- eine elastomere Außenwand (30, 130, 131) gebunden ist, und **dadurch**, dass das Verfahren ferner umfasst
(ii) Fixieren des weichen Griffs an den Ultraschall-Zahnschabereinsatz (14, 114), um einen Ultraschall-Zahnschabereinsatz (14, 114) zu bilden, der einen weichen Griff aufweist.

2. Verfahren nach Anspruch 1, worin die steife polymere Innenwand (28, 128, 129) im allgemeinen zylindrisch ist, und der weiche Griff mit dem Verbindungsstück (26, 126) mit Schnappsitz verbunden ist.

3. Verfahren nach Anspruch 1, worin die steife polymere Innenwand (28, 128, 129) eine erste steife polymere Seite und eine zweite steife polymere Seite aufweist, die elastomere Außenwand (30, 130, 131) eine erste elastomere Seite und eine zweite elastomere Seite aufweist, die erste elastomere Seite an die erste steife polymere Seite befestigt ist, die zweite elastomere Seite an die zweite steife polymere Seite befestigt ist, und die steife polymere Innenwand (28, 128, 129) durch Befestigen der ersten steifen polymeren Seite an die zweite steife polymere Seite ausgebildet wird.

4. Verfahren nach Anspruch 1, worin das weiche Griffteil (27, 127) im allgemeinen zylindrisch ist.

5. Verfahren nach Anspruch 1, worin die steife polymere Innenwand (28, 128, 129) im allgemeinen zylindrisch und die elastomere Außenwand (30, 130, 131) im allgemeinen zylindrisch ist.

6. Verfahren nach Anspruch 1, worin das weiche Griffelement (27, 127) im allgemeinen zylindrisch ist und an den Ultraschall-Zahnschabereinsatz (14, 114) mittels Schnappsitz befestigt ist.

7. Verfahren nach Anspruch 1, worin die steife polymere Innenwand (28, 128, 129) eine Düse (25) für den Ultraschall-Zahnschabereinsatz (14, 114) bildet.

8. Einsatz (14, 114) zur Verwendung in einem Dental-Handstück (10), das ein Gehäuse (12) aufweist, das eine längliche Bohrung aufweist, umfassend:
eine Spitze (24, 124),
ein Magnetostriktionselement,
ein Verbindungsstück,
eine Düse (25) und
einen Griff,
wobei die Spitze (24, 124) mit einem ersten Ende des Verbindungsstücks verbunden ist, das Magnetostriktionselement mit einem zweiten Ende des Verbindungsstücks verbunden ist,
die Düse (25) durch das Verbindungsstück getragen wird,
der Griff durch die Düse (25) getragen wird,
**dadurch gekennzeichnet, dass**
der Griff eine Innenwand aus steifem polymeren Material (28, 128, 129) aufweist, die an eine Außenwand (30, 130, 131) aus elastomerem polymeren Material gebunden ist.

9. Verfahren zur Herstellung eines Ultraschall-Zahnschabereinsatzes (14, 114), der einen weichen Griff aufweist, nach Anspruch 1, umfassend:
Bereitstellen eines Ultraschall-Zahnschabereinsatzes (14, 114), der eine Düse (25) und ein Magnetostriktionselement aufweist,
Bereitstellen eines weichen Griffs, der einen steifen polymeren Kanal aufweist, der eine elastomere Außenschicht trägt,
Positionieren des weichen Griffelements (27, 127) über die Düse (25), um einen Ultraschall-Zahnschabereinsatz (14, 114) auszubilden, der einen weichen Griff aufweist.

10. Verfahren nach Anspruch 9, worin der steife polymere Kanal im allgemeinen zylindrisch und die elastomere Schicht im allgemeinen zylindrisch ist.

11. Verfahren nach Anspruch 9, worin der weiche Griff im allgemeinen zylindrisch ist und an den Ultraschall-Zahnschabereinsatz (14, 114) mittels Schnappsitz befestigt ist.

12. Verfahren zur Herstellung eines Ultraschall-Zahnschabereinsatzes (14, 114) nach Anspruch 1, das die folgende Stufenreihenfolge aufweist:
(a) Bereitstellen eines Ultraschall-Zahnschabereinsatzes (14, 114) und eines ersten Weichgriff-Halbquerschnittsteils und eines zweiten Weichgriff-Halbquerschnittsteils, wobei das erste Weichgriff-Halbquerschnittsteil eine erste steife polymere Innenwand (28, 128, 129) und eine erste elastomere Außenwand (30, 130, 131) aufweist, und das zweite Weichgriff-Halbquerschnittsteil eine zweite steife polymere Innenwand (28, 128, 129) und eine zweite elastomere Außenwand (30, 130, 131) aufweist, der Ultraschall-Zahnschabereinsatz (14, 114) eine Spitze (24, 124), ein Verbindungsstück (26, 126) und ein Magnetostriktionselement aufweist, das Verbindungsstück (26, 126) einen länglichen Körper, ein erstes Verbindungsstückende und ein zweites Verbindungsstückende aufweist, das erste Verbindungsstückende mit der Spitze (24, 124) verbunden ist, das zweite Verbindungsstückende mit dem Magnetostriktionselement verbunden ist, und
(b) Befestigen des ersten Weichgriff-Halbquerschnittsteils an das zweite Weichgriff-Halbquerschnittsteil unter Ausbildung eines weichen Griffs, wobei die erste steife polymere Innenwand und die zweite steife polymere Innenwand den länglichen Körper zur Ausbildung eines Ultraschall-Zahnschabereinsatzes (14, 114), der einen weichen Griff aufweist, umgrenzen.

13. Verfahren zur Herstellung eines Ultraschall-Zahnschabereinsatzes (14, 114), der einen weichen Griff aufweist, nach Anspruch 1, das die folgende Stufenreihenfolge aufweist:
Bereitstellen eines Weichgriffteils (27, 127), das eine elastomere Außenwand (30, 130, 131) aufweist, die an eine steife polymere Innenwand (28, 128, 129) befestigt ist, und
Verbinden des Weichgriffteils (27, 127) mit einem Ultraschall-Zahnschabereinsatz (14, 114), um einen Ultraschall-Zahnschabereinsatz (14, 114) zu bilden, der einen weichen Griff aufweist.

14. Verfahren nach Anspruch 9, worin der Ultraschall-Zahnschabereinsatz (14, 114) eine Spitze (24, 124), ein Verbindungsstück (26, 126) und ein Magnetostriktionselement aufweist, das Verbindungsstück (26, 126) ein erstes Verbindungsstückende aufweist, das mit der Spitze (24, 124) verbunden ist, und ein zweites Verbindungsstückende, das mit dem Magnetostriktionselement verbunden ist.

15. Verfahren nach Anspruch 10, worin die steife Wand im allgemeinen zylindrisch ist und der weiche Griff an das Verbindungsstück (26, 126) mittels Schnappsitz befestigt ist.

16. Verfahren nach Anspruch 10, worin der Ultraschall-Zahnschabereinsatz (14, 114) außerdem eine Düse (25) aufweist, und die Düse (25) die steife Wand aufweist.

## Revendications

1. Procédé pour fabriquer un insert (14) d'instrument dentaire à détartrer, ultrasonique, ayant un manche souple, comprenant la séquence suivante d'étapes :
(i) la fourniture
d'un manche souple (27, 127) et
d'un insert (14, 114) d'instrument dentaire à détartrer, ultrasonique, ledit insert (14, 114) d'instrument dentaire à détartrer, ultrasonique, ayant
une pointe (24, 124),
un raccord (26, 126), et
un élément magnétostrictif,
ledit raccord (26, 126) ayant une première extrémité de raccord et une deuxième extrémité de raccord, ladite première extrémité de raccord étant reliée à ladite pointe (24, 124), ladite deuxième extrémité de raccord étant reliée audit élément magnétostrictif (22),
**caractérisé en ce que**
ledit manche souple (27, 127) a
une paroi interne polymère rigide (28, 128, 129) liée à
une paroi externe élastomère (30, 130, 131), et **en ce que** le procédé comprend, en outre,
(ii) la fixation dudit manche souple audit insert (14, 114) d'instrument dentaire à détartrer, ultrasonique, afin de former un insert (14, 114) d'instrument dentaire à détartrer, ultrasonique, ayant un manche souple.

2. Procédé selon la revendication 1, dans lequel ladite paroi interne polymère rigide (28, 128, 129) est généralement cylindrique, et ledit manche souple est encliqueté sur ledit raccord (26, 126).

3. Procédé selon la revendication 1, dans lequel ladite paroi interne polymère rigide (28, 128, 129) comprend un premier côté polymère rigide et un deuxième côté polymère rigide, ladite paroi externe élastomère (30, 130, 131) comprend un premier côté élastomère et un deuxième côté élastomère, ledit premier côté élastomère est fixé audit premier côté polymère rigide, ledit deuxième côté élastomère est fixé audit deuxième côté polymère rigide, et ladite paroi interne polymère rigide (28, 128, 129) est formée en fixant ledit premier côté polymère rigide audit deuxième côté polymère rigide.

4. Procédé selon la revendication 1, dans lequel ledit élément formant manche souple (27, 127) est généralement cylindrique.

5. Procédé selon la revendication 1, dans lequel ladite paroi interne polymère rigide (28, 128, 129) est généralement cylindrique et ladite paroi externe élastomère (30, 130, 131) est généralement cylindrique.

6. Procédé selon la revendication 1, dans lequel ledit élément formant manche souple (27, 127) est généralement cylindrique et est encliqueté sur ledit insert (14, 114) d'instrument dentaire à détartrer, ultrasonique.

7. Procédé selon la revendication 1, dans lequel ladite paroi interne polymère rigide (28, 128, 129) forme une buse (25) pour ledit insert (14, 114) d'instrument dentaire à détartrer, ultrasonique.

8. Insert (14, 114) pour utilisation dans une pièce à main dentaire (10) comportant un logement (12) ayant un alésage longitudinal, comprenant :
une pointe (24, 124),
un élément magnétostrictif,
un élément de connexion,
une buse (25), et
un manche,
ladite pointe (24, 124) étant reliée à une première extrémité dudit élément de connexion,
ledit élément magnétostrictif étant relié à une deuxième extrémité dudit élément de connexion,
ladite buse (25) étant supportée par ledit élément de connexion,
ledit manche étant supporté par ladite buse (25),
**caractérisé en ce que**
ledit manche comprend une paroi interne de matériau polymère rigide (28, 128, 129) liée à une paroi externe de matériau polymère élastomère (30, 130, 131).

9. Procédé pour fabriquer un insert (14) d'instrument dentaire à détartrer, ultrasonique, ayant un manche souple, selon la revendication 1, comprenant :
la fourniture d'un insert (14, 114) d'instrument dentaire à détartrer, ultrasonique, ayant une buse (25) et un élément magnétostrictif,
la fourniture d'un manche souple ayant un canal polymère rigide supportant une couche externe élastomère,
le positionnement dudit élément formant manche souple (27, 127) sur ladite buse (25) pour former un insert (14, 114) d'instrument dentaire à détartrer, ultrasonique, ayant un manche souple.

10. Procédé selon la revendication 9, dans lequel ledit canal polymère rigide est généralement cylindrique et ladite couche élastomère est généralement cylindrique.

11. Procédé selon la revendication 9, dans lequel ledit manche souple est généralement cylindrique et est encliqueté sur ledit insert (14, 114) d'instrument dentaire à détartrer, ultrasonique.

12. Procédé pour fabriquer un insert (14, 114) d'instrument dentaire à détartrer, ultrasonique, selon la revendication 1, comprenant la séquence suivante d'étapes :
(a) la fourniture d'un insert (14, 114) d'instrument dentaire à détartrer, ultrasonique, et d'un premier élément de demi-section de manche souple et d'un deuxième élément de demi-section de manche souple,
ledit premier élément de demi-section de manche souple ayant une première paroi interne polymère rigide (28, 128, 129) et une première paroi externe élastomère (30, 130, 131), et ledit deuxième élément de demi-section de manche souple ayant une deuxième paroi interne polymère rigide (28, 128, 129) et une deuxième paroi externe élastomère (30, 130, 131),
ledit insert (14, 114) d'instrument dentaire à détartrer, ultrasonique, ayant une pointe (24, 124), un raccord (26, 126), et un élément magnétostrictif, ledit raccord (26, 126) ayant un corps allongé, une première extrémité de raccord et une deuxième extrémité de raccord, ladite première extrémité de raccord étant reliée à ladite pointe (24, 124), ladite deuxième extrémité de raccord étant reliée audit élément magnétostrictif, et
(b) la fixation dudit premier élément de demi-section de manche souple audit deuxième élément de demi-section de manche souple pour former un manche souple, grâce à quoi ladite première paroi interne polymère rigide et ladite deuxième paroi interne polymère rigide circonscrivent ledit corps allongé pour former un insert (14, 114) d'instrument dentaire à détartrer, ultrasonique, ayant un manche souple.

13. Procédé pour fabriquer un insert (14, 114) d'instrument dentaire à détartrer, ultrasonique, ayant un manche souple selon la revendication 1, comprenant la séquence suivante d'étapes :
la fourniture d'un élément formant manche souple (27, 127) ayant une paroi externe élastomère (30, 130, 131) fixée à une paroi interne polymère rigide (28, 128, 129), et la connexion dudit élément formant manche souple (27, 127) à un insert (14, 114) d'instrument dentaire à détartrer, ultrasonique, pour former un insert (14, 114) d'instrument dentaire à détartrer, ultrasonique, ayant un manche souple.

14. Procédé selon la revendication 9, dans lequel ledit insert (14, 114) d'instrument dentaire à détartrer, ultrasonique, a une pointe (24, 124), un raccord (26, 126), et un élément magnétostrictif, ledit raccord (26, 126) ayant une première extrémité de raccord reliée à ladite pointe (24, 124), et une deuxième extrémité de raccord, reliée audit élément magnétostrictif.

15. Procédé selon la revendication 10, dans lequel ladite paroi rigide est généralement cylindrique, et ledit manche souple est encliqueté sur ledit raccord (26, 126).

16. Procédé selon la revendication 10, dans lequel ledit insert (14, 114) d'instrument dentaire à détartrer, ultrasonique, comprend, en outre, une buse (25) et ladite buse (25) comprend ladite paroi rigide.
